Europäisches Patentamt

European Patent Office

Office européen des brevets

(19)

(11) **EP 1 290 634 B1**

(12) **FASCICULE DE BREVET EUROPEEN**

(45) Date de publication et mention
de la délivrance du brevet:
**25.08.2004 Bulletin 2004/35**

(21) Numéro de dépôt: **01945369.5**

(22) Date de dépôt: **07.06.2001**

(51) Int Cl.⁷: **G06T 1/00**

(86) Numéro de dépôt international:
**PCT/FR2001/001753**

(87) Numéro de publication internationale:
**WO 2001/095254 (13.12.2001 Gazette 2001/50)**

(54) **PROCEDE DE RECONSTRUCTION ACCELERE D'UNE IMAGE TRIDIMENSIONNELLE**

DREIDIMENSIONALES, BESCHLEUNIGTES BILD-REKONSTRUKTIONSVERFAHREN

METHOD FOR ACCELERATED RECONSTRUCTION OF A THREE-DIMENSIONAL IMAGE

(84) Etats contractants désignés:
**DE GB IT**

(30) Priorité: **07.06.2000 FR 0007278**

(43) Date de publication de la demande:
**12.03.2003 Bulletin 2003/11**

(73) Titulaire: **COMMISSARIAT A L'ENERGIE ATOMIQUE**
**75752 Paris Cédex 15 (FR)**

(72) Inventeurs:
• **RODET, Thomas**
**F-38000 Grenoble (FR)**
• **GRANGEAT, Pierre**
**F-38330 Saint-Ismier (FR)**

• **DESBAT, Laurent**
**F-38000 Grenoble (FR)**

(74) Mandataire: **Ilgart, Jean-Christophe et al**
**c/o Société Brevatome,**
**3, rue du Docteur Lanceraux**
**75008 Paris (FR)**

(56) Documents cités:
**WO-A-00/19902**

• **DELANEY A H ET AL: "MULTIRESOLUTION TOMOGRAPHIC RECONSTRUCTION USING WAVELETS" IEEE TRANSACTIONS ON IMAGE PROCESSING,US,IEEE INC. NEW YORK, vol. 4, no. 6, 1 juin 1995 (1995-06-01), pages 799-813, XP000533946 ISSN: 1057-7149**

## Description

Le sujet de cette invention est un procédé de reconstruction accéléré d'une image tridimensionnelle, qui est fondé sur une analyse fréquentielle.

Les procédés de reconstruction d'images par tomographie impliquent l'établissement de projections, mesurées par les détecteurs d'un réseau, qui sont la somme de la propriété à représenter sur l'image le long de rayons passant à travers l'objet et aboutissant au détecteur. Dans la tomographie d'atténuation, on mesure l'absorption totale d'un rayon émis par une source externe à travers l'objet à représenter ; dans la tomograhie d'émission, l'objet a été rendu émissif d'un rayonnement dont les projections représentent des sommes le long d'un rayon respectif de collimation associé à chaque détecteur, pour un temps de mesure déterminé. L'invention s'applique indistinctement à tous ces procédés d'établissement des projections et ne concerne que leur traitement ultérieur.

Un système d'équations linéaires de très grande taille exprime la valeur totale, mesurée à chaque rayon de projection, de la propriété d'absorption ou d'émission à représenter en fonction des valeurs qu'elle prend sur les points de l'objet passant par ce rayon. L'inversion de ce système permet de calculer la valeur de la propriété à chaque point de l'objet et de reconstruire l'image recherchée, et des méthodes appelées algébriques ont été conçues pour procéder ainsi. Cependant, les méthodes algébriques deviennent très peu commodes quand des images de résolution fine sont exigées, les temps de calcul étant excessifs, et c'est pourquoi on a encore développé des méthodes dites analytiques dans lesquelles les projections subissent un traitement numérique appelé filtrage, après quoi elles sont combinées selon un procédé dit de rétroprojection qui donne la valeur de la propriété recherchée à chaque point de l'objet en fonction des projections passant par ce point. Ces méthodes sont maintenant en vogue, mais elles exigent aussi un gros volume de calcul qu'on voudrait réduire. L'invention est un moyen de satisfaire à ce désir.

Elle concerne un procédé de reconstruction d'une image tridimensionnelle à partir de projections bidimensionnelles de l'image, comprenant un filtrage numérique des projections puis une rétroprojection des projections filtrées, caractérisé en ce qu'il consiste, après avoir fait une transformée de Fourier des projections, à décomposer ladite transformée en blocs délimités par des fréquences de coupure, à faire une transformée de Fourier inverse des blocs, la rétroprojection étant faite sur chacune desdites projections filtrées associées aux blocs, obtenant ainsi des imagettes, et à combiner les imagettes pour obtenir l'image: Cependant, il est avantageux de ne traiter ainsi que les projections qui ne sont pas nulles.

Les imagettes peuvent être combinées entre elles après avoir subi une transformée de Fourier ; l'image est alors obtenue en appliquant une transformée de Fourier inverse.

Les imagettes correspondent à des portions sous-échantillonnées de l'image. Plus précisément, elles n'expriment que des parties de l'information totale contenue dans les projections, mais qui concernent toute l'image à reconstruire. Cependant, comme les rétroprojections sont menées séparément pour chacune des imagettes, une reconstruction uniforme des imagettes permet d'appliquer à chacune d'elles des calculs de rétroprojection identiques, ce qui épargne un volume important de calculs puisque les imagettes ont moins de points que l'image totale.

Parmi des idées déjà proposées pour réduire les temps de calcul en tomogaphie, on peut mentionner l'article « Fast Spatio-Temporal Image Reconstruction for Dynamic PET » par Wernick et d'autres, où une transformée de Karhunen-Loève est faite sur les projections d'une séquence d'images et les termes les moins significatifs de la transformée sont éliminés. La méthode de résolution est algébrique, et cet article ne concerne que des reconstructions d'images d'un objet mobile. La transformée de Karhunen-Loève est coûteuse en temps de calcul et n'offre de l'intérêt que pour des situations où les calculs sont extrêmement abondants. On peut aussi citer le brevet des Etats-Unis 5 907 593 où des sous-échantillonnages du nombre de vues et des sous-échantillonnages.sur les projections sont proposés pour accélérer les temps de calcul.

Dans d'autres variantes de l'invention, éventuellement cumulables, les calculs de la reconstruction d'image peuvent être réduits par des simplifications, et les informations associées à certaines imagettes peuvent même être négligées complètement. Dans d'autres variantes encore du procédé, il est possible d'utiliser des informations particulières, notamment définies à l'avance, pour aider à un bon déroulement des calculs. On peut ainsi tenir compte d'un mouvement d'ensemble estimé de l'objet.

L'invention sera maintenant décrite au moyen des figures, dont :

- la figure 1 illustre l'appareillage d'obtention des projections.
- la figure 2 explicite les informations de départ et à obtenir (projections et image reconstruite),
- la figure 3 est une vue d'ensemble du procédé,
- les figures 4 à 8 illustrent la décomposition fréquentielle caractéristique de l'invention,
- et la figure 9 est un organigramme général d'un procédé de reconstruction auquel l'invention a été intégrée.

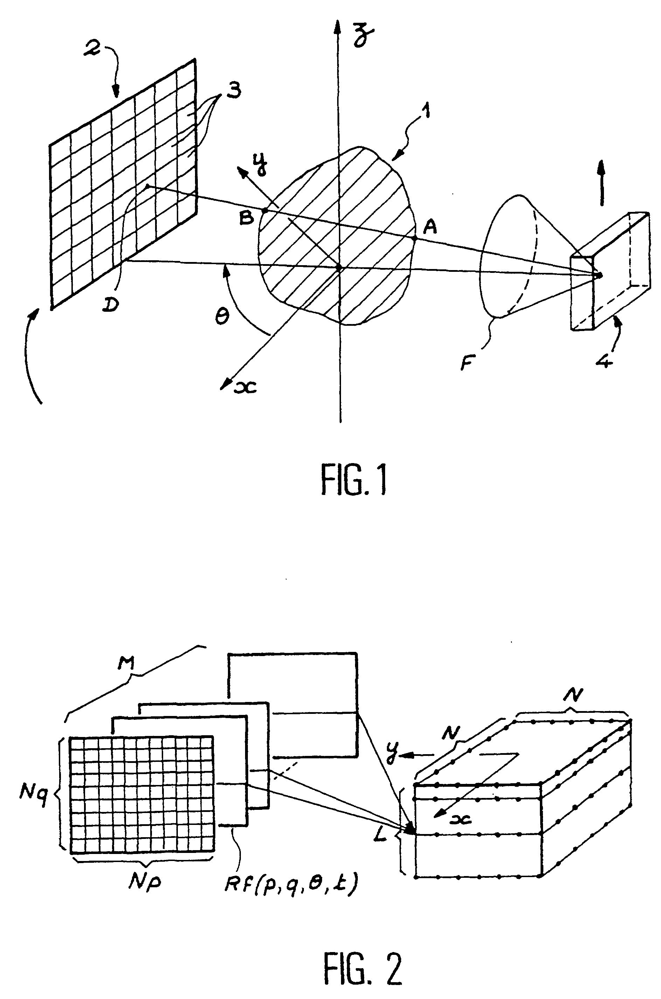

Comme le représente la figure 1, un réseau 2 bidimensionnel de détecteurs 3 et un dispositif de source 4 sont simultanément mobiles autour d'un objet 1 à représenter par l'image. Le rayonnement émis peut être un rayonnement X conique ayant pour origine un foyer F ponctuel. Les détecteurs 3 sont focalisés vers le foyer F, et chacun d'eux capte ainsi un rayon originaire de ce foyer F et parvenant à lui au point D. Les rayons utiles à la reconstruction traversent l'objet 1 entre un point A et un point B en étant partiellement absorbés par chaque point de l'objet 1 qu'ils traversent en fonction de la nature physique de ce point. Le problème de reconstruction consiste, partant d'un jeu de projections Rf sur le réseau 2 prises à des positions angulaires θ du système et à des temps t qu'il est utile de considérer si l'objet 1 est mobile, à obtenir une image I tridimensionnelle de l'objet, qu'on peut considérer comme une superposition de L coupes bidimensionnelles de NxN points, empilées sur l'axe Oz de rotation de la source 4 et du réseau 2. Comme le symbolise la figure 2, les projections Rf sont en nombre de M dont chacune comprend NpxNq valeurs en raison des Nq lignes et Np colonnes de détecteurs 3 mesurant dans le réseau 2. On ne s'étendra pas sur les détails des procédés de filtrage et de rétroprojection, spécifiques aux procédés analytiques de reconstruction et qui assurent la conversion des projections Rf en l'image I puisqu'ils ont été décrits dans bien d'autres publications et quelques brevets, dont on citera le brevet français 2 615 619 comme le premier brevet de cette équipe de recherche, et qui décrivait un procédé possible en entier. De même, une étape de réarrangement est nécessaire dans les procédés à source de rayonnement conique pour exprimer les points des projections dans des coordonnées rectangulaires (x, y, z) compatibles avec la représentation des points des images, ce qu'on appelle un « réarrangement conique-parallèle », mais cela est déjà connu et pratiqué.

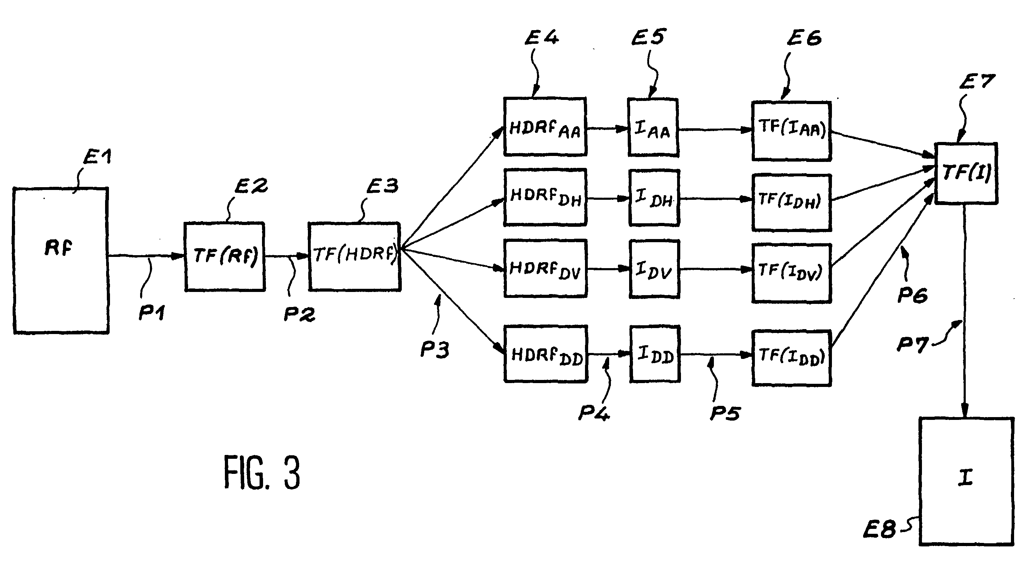

L'état E1 figuré au début de ce procédé à la figure 3 est l'ensemble des mesures ou projections Rf qu'on vient de décrire. On applique à l'étape P1 du procédé une transformée de Fourier rapide (FFT) spatio-temporelle pour obtenir un jeu de projections transformées TF(Rf) à l'état E2 du système.

Chaque valeur mesurée par un des détecteurs 3 est donc une projection individuelle qui peut être caractérisée par les paramètres p et q de position du détecteur 3 dans le réseau 2 de dimension NpxNq, l'instant t de prise de la mesure et l'orientation ou la position angulaire θ du réseau 2 à cet instant t. Les paramètres θ et t sont dépendants selon la vitesse de rotation du réseau 2 et si l'objet 1 est mobile, il est avantageux que les mesures soient répétées à des instants différents pour chaque position angulaire θ du réseau 2.

Les projections individuelles Rf (p, q, θ, t) peuvent donc être réparties en jeux de projections répartis selon la valeur de θ. Au sein de ces jeux, on s'intéresse aux lignes de détecteurs 3 horizontales, ou plus généralement transaxiales (à q constant) afin de simplifier le problème en considérant l'image I comme une superposition de L coupes horizontales de NxN points dont chacune sera obtenue à l'aide des projections Rf de même niveau, c'est-à-dire à la valeur correspondante de la coordonnée q (des calcul de moyennes ou d'interpolation des projection sont nécessaires si Nq≠L, pour passer de q à z, mais ils sont couramment pratiqués dans cette technique et d'ailleurs élémentaires, si bien qu'on ne les exposera pas ici). Les projections transformées TF(Rf) sont donc faites selon les deux coordonnées p et t subsistantes dans les groupes de projection individuelles considérés, soit :

$$\text{TF(Rf)} (\nu_p, \nu_q, \theta, \nu_t)=\int \acute{R}_f(p,q,\theta,t)e^{-2i\pi\nu_t t}.e^{-2i\pi\nu_p p}dtdp.$$

Les projections transformées sont caractérisées par les variables $\nu_t$ et $\nu_p$, et leur nombre dépend de l'échantillonnage du signal.

Dans la suite de l'exposé, on ne s'intéressera qu'à la dimension spatiale, en νp, de la transformée de Fourier, car la dimension temporelle, en νt, est indépendante, c'est-à-dire qu'on ne considérera que des groupes de projections transformées TF(Rf) à même valeur de νt.

Les projections transformées TF(Rf) ainsi regroupées et définies par les paramètres νp et θ sont alors regroupées selon les paramètres νx et νy selon les formules νx=νpcosθ et νy=νpsinθ dans des matrices bidimensionnelles de dimension NxN (si on échantillonne avec N fréquences νp) pour νt et q constants. Les projections transformées sont en réalité reclassées d'après les axes principaux x et y d'éloignement des points des coupes de l'image I, x et y étant perpendiculaires entre eux et à z et l'angle θ pouvant être compté à partir de x.

Le filtrage numérique nécessaire à la reconstruction de l'image mais qui n'est pas une caractéristique de la présente invention peut ensuite être mené à l'étape P2 : il s'agit en pratique de l'application d'un filtre en rampe D, auquel on peut éventuellement ajouter un filtre d'apodisation H pour atténuer l'importance des hautes fréquences et en particulier du bruit ; il est indifférent de faire ce filtrage dans le domaine spatial des projections physiques, à l'état E1, ou dans le domaine de Fourier comme ici, puisque les projections n'ont pas été modifiées mais exprimées de façon différente. L'état E3 du système est alors symbolisé par des projections transformées et filtrées TFHD(Rf).

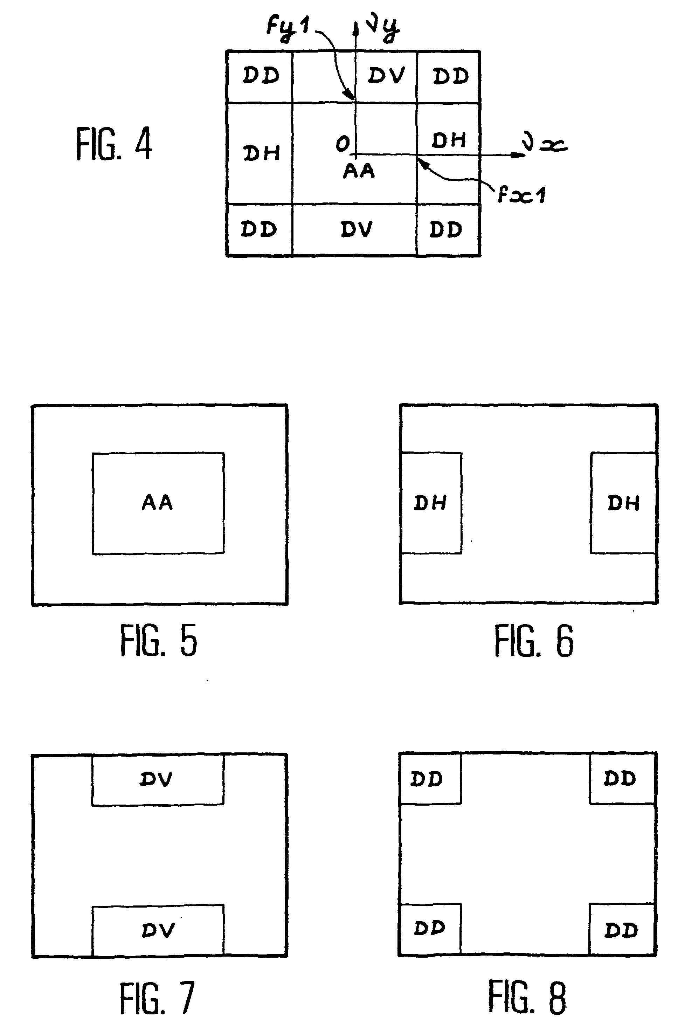

On aborde maintenant les étapes les plus caractéristiques de l'invention. La figure 4 illustre une des matrices de projections transformées et filtrées TFHD(Rf) de l'état E3. L'étape P3 qui est ensuite menée est une transformée de Fourier inverse dans le domaine spatial après qu'on a divisé les projections TFHD(Rf) en blocs. D'une façon générale, les blocs seront de tailles égales et séparés par des fréquences de coupure uniformément réparties sur chacun des axes νx et νy, dans tout le domaine fréquentiel considéré. Ici, B=2 et les projections sont divisés en quatre de part et d'autre des fréquences de coupure fx1=N/2 sur l'axe νx et fy1=N/2 sur l'axe νy. On forme ainsi quatre portions de projections transformées et filtrées qui sont représentées sur les figures 5, 6, 7 et 8 ; ces portions portent les références AA (sous fx1 et fy1), DH (sur fx1 mais sous fy1), DV (sous fx1 mais sur fy1) et DD (sur fx1 et fy1). Hors de ces portions, les blocs représentés sur les figures 5 à 8 contiennent des valeurs nulles.

Une inversion de la transformée de Fourier spatiale menée ensuite sur chacune de ces portions donne quatre blocs de projections filtrées intitulés HDRfAA, HDRfDH, HDRfDV et HDRfDD comme on l'exprime à la figure 3. Une rétroprojection R# est ensuite menée à l'étape P4 séparément sur chacune des projections pour donner quatre imagettes $I_{AA}$, $I_{DH}$, $I_{DV}$ et $I_{DD}$, ce que l'on représente à l'état E5. Si les blocs de projections ont (N/2)x(N/2) fréquences, soit $N^2/_4$ ici, les imagettes ont $N^2/_4$ points. Plusieurs remarques doivent maintenant être faites.

Les blocs de projections et les imagettes des états E4 et E5 ont chacun le quart des informations du système total et expriment des caractéristiques différentes de celui-ci. En particulier, l'imagette $I_{AA}$, provenant des informations à basse fréquence dans le domaine de Fourier est susceptible de ressembler assez bien à l'allure d'ensemble de l'image I de l'objet 1, alors que les autres imagettes proviennent de la contribution des hautes fréquences dans le domaine de Fourier et expriment donc plutôt les petits détails de l'image, et le bruit des mesures s'y concentre. Ces autres imagettes n'ont donc souvent qu'une importance moindre, et on peut souvent envisager de les négliger en s'épargnant les calculs qui s'y rapportent. Mais même si on préfère obtenir ces imagettes et les exploiter dans les dernières étapes du procédé afin qu'elles contribuent à préciser l'image de l'objet, un temps de calcul important est gagné car le temps de rétroprojection, qui est important en général, est proportionnel au nombre de points (NxNxL) de l'image I. Ici, la rétroprojection est appliquée à quatre blocs différents, mais de volume réduit. De plus, elle est menée de la même façon pour chacune des quatre imagettes $I_{AA}$, $I_{DH}$, $I_{DV}$ et $I_{DD}$, qui présentent des éléments complémentaires d'une même image et sont divisées en autant de points semblables, ce qui fait que les calculs d'adresse des rétroprojections, qui donnent les positions des points des imagettes sur les projections, sont identiques pour toute les imagettes tout en étant moins nombreux que pour l'image I entière à reconstituer, puisque les imagettes contiennent chacune $B^2$ fois moins de points que l'image I. Enfin, les blocs HDRfAA, etc... de projections filtrées contiennent un grand nombre de projections nulles puisqu'ils résultent de coupures de l'ensemble des projections transformées dans le domaine de Fourier : les fréquences coupées ne fournissent que des valeurs nulles quand la transformée inverse est faite. Les rétroprojections ne portent donc que sur les projections non nulles, ce qui réduit encore le volume des calculs. S'il y a $B^2$ imagettes, elles contiennent B/2 fois moins de projections que l'image initiale.

Les dernières étapes du procédé consistent en une combinaison des imagettes pour obtenir l'image I recherchée : on procède par une transformée de Fourier spatiale P5 des imagettes $I_{AA}$, etc. afin d'obtenir des imagettes transformées TF($I_{AA}$), à l'état E6, qu'on combine en les juxtaposant dans le domaine de Fourier à l'étape P6, obtenant une transformée de Fourier TF(I) de l'image I, à l'état E7 ; une transformée de Fourier inverse spatiale et temporelle est finalement menée à l'étape P7 afin de donner une séquence d'images I tridimensionnelle de la figure 2, formées de L coupes NxN à n'importe quel instant t, l'état T8 à différents instants de l'objet 1 supposé en mouvement.

Il faut souligner que la transformée de Fourier temporelle et son inversion n'ont de sens que pour des objets 1 mobiles et peuvent ne pas être accomplies dans le cas contraire. Cependant, l'invention est encore plus avantageuse pour les objets mobiles, car les compressions de calculs qu'on peut se permettre après avoir divisé les données en blocs sont plus nombreuses en général : la plupart des mouvements sont simples et n'occupent que quelques fréquences vt proches de zéro dans le domaine de Fourier spatio-temporel, ce qui permet d'éliminer en général tous les blocs associés à des fréquences temporelles élevées.

Une variante du procédé consiste à comprimer les calculs par l'introduction de connaissances préalables. Si par exemple l'objet 1 se déplace selon un vecteur de vitesse

$$\vec{d} = \begin{pmatrix} a \\ b \end{pmatrix},$$

toute l'information correspondante se trouve dans le plan $a\nu x + b\nu y + \nu t = 0$ dans le domaine de Fourier. Il suffit donc de considérer l'information contenue dans ce plan pour reconstituer le mouvement d'ensemble de l'objet 1.

Réciproquement, cette information peut être éliminée si on ne veut pas reconstituer l'effet du mouvement d'ensemble dans la séquence d'images.

Il existe aussi la possibilité de faire l'hypothèse que l'objet 1 dont on cherche à calculer le mouvement ne peut pas se déplacer au-dessus d'une vitesse maximale. On peut alors démontrer que le volume d'un cône dans le domaine tridimensionnel de Fourier défini par les axes ($\nu x$, $\nu y$, $\nu t$) et dont l'axe central est $\nu t$ est vide, ce qui permet d'écarter certains blocs.

Dans d'autres variantes du procédé, on peut estimer un mouvement d'ensemble de l'objet 1 par un moyen indépendant du réseau 2 de détecteurs 3, comme une paire de caméras montées en stéréoscopie. Les positions des projections individuelles Rf(p, q, θ, t) peuvent être corrigées sur le réseau 2 de manière à compenser autant que possible ce mouvement d'ensemble et à donner des projections transformées TF(Rf) dont le domaine de fréquences est beaucoup plus réduit, ce qui accroît encore le nombre de blocs qu'on peut éliminer.

On a considéré précédemment des matrices bidimensionnelles de projections transformées TF(Rf) définies par les axes (vx, vy) et des divisions en blocs d'après deux groupes de fréquences de coupure en vx et vy. Il est au moins aussi avantageux, quand la transformée de Fourier temporelle intervient, de regrouper les projections transformées en une matrice tridimensionnelle unique définie par les axes (vx, vy, vt) ; les blocs résultent de la division de la matrice d'après trois groupes de fréquences de coupure en vx, vy et vt. Le procédé reste le même dans son principe mais au lieu de $B^2$ blocs, la matrice tridimensionnelle est divisée en $B^3$ blocs.

On peut aussi regrouper les projections transformées en une matrice quadridimensionnelle, définie par les axes (vx, vy, vz, vt). Les blocs résultent de la division de la matrice d'après quatre groupes de fréquences de coupure en vx, vy, vz et vt. Le procédé reste aussi le même dans son principe mais au lieu de $B^2$ blocs, on a $B^4$ blocs, la matrice quadridimensionnelle est divisée en $B^4$ blocs.

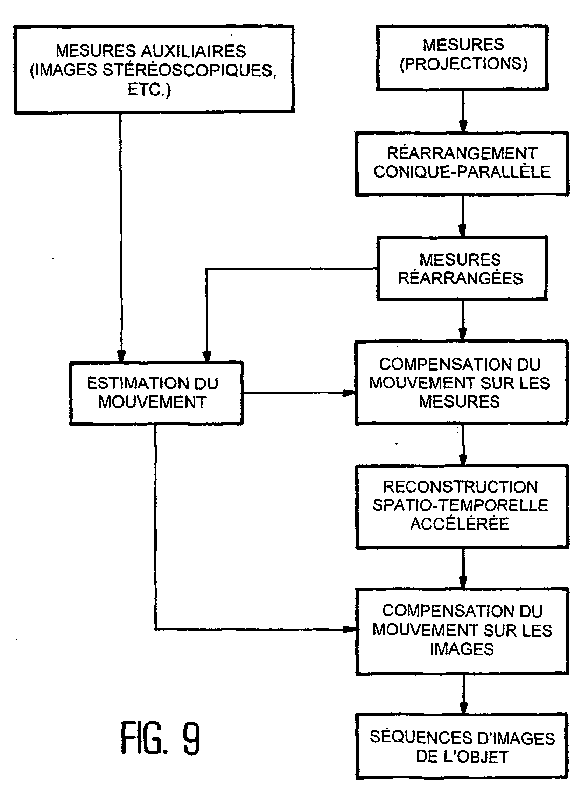

La figure 9 est un organigramme général de représentation de tous ces procédés qu'on peut associer à l'invention (la reconstruction spatio-temporelle, ou éventuellement spatiale, accélérée) pour obtenir un procédé complet d'obtention d'une séquence d'images. Il est fourni à titre de résumé et ne donne pas d'information propre sur l'invention ; les étapes extérieures à l'invention ont déjà été explicitées dans la mesure utile.

## Revendications

1. Procédé de reconstruction d'une image tridimensionnelle (I) à partir de projections bidimensionnelles (Rf) de l'image, comprenant un filtrage numérique des projections puis une rétroprojection des projections filtrées, **caractérisé en ce qu'**il consiste, après avoir fait une transformée de Fourier (P1) des projections, à décomposer (P3) ladite transformée en blocs délimités par des fréquences de coupure (fx, fy), à faire une transformée de Fourier inverse (P3) des blocs, la rétroprojection (P4) étant faite sur chacune des projections associées auxdits blocs, donnant ainsi des imagettes (E5), et à combiner (P6) les imagettes pour obtenir l'image (E6).

2. Procédé selon la revendication 1, **caractérisé en ce que** les imagettes sont combinées après avoir subi une transformée de Fourier (P5) et l'image est obtenue par une transformée de Fourier inverse (P7).

3. Procédé selon l'une quelconque des revendications 1 et 2, **caractérisé en ce que** les rétroprojections sont identiques pour chacun des blocs.

4. Procédé selon l'une quelconque des revendications 1 à 3, **caractérisé en ce qu'**il comprend des éliminations de blocs selon des critères de contenu.

5. Procédé selon l'une quelconque des revendications 1 à 4, **caractérisé en ce que** la transformée de Fourier directe ou inverse comprend une transformée de Fourier temporelle des projections et une transformée de Fourier spatiale des projections.

6. Procédé selon l'une quelconque des revendications 1 à 5, **caractérisé en ce que** l'image est reconstruite par coupes (L), la transformée de Fourier comprenant une transformée de Fourier spatiale le long de lignes de projections (Nq) parallèles aux coupes.

7. Procédé selon la revendication 6, **caractérisé en ce que** la transformée de Fourier spatiale le long de lignes de projections (Nq) donne des fréquences spatiales (vp) qui sont associées à des orientations de projections (θ) converties en fréquences spatiales bidimensionnelles (vx, vy) en fonction d'axes principaux (x, y) de l'image (I).

8. Procédé selon l'une quelconque des revendications 1 à 7, **caractérisée en ce qu'**il comprend, avant la rétroprojection (P4), une sélection des projections associées auxdits blocs qui ont des valeurs non nulles, la rétroprojection n'étant faite que sur lesdites projections aux valeurs non nulles.

## Patentansprüche

1. Verfahren zur Rekonstruktion eines dreidimensionalen Bilds (I) aus zweidimensionalen Projektionen (Rf) des Bilds, ein digitales Filtern der Projektionen und dann eine Rückprojektion der gefilterten Projektionen umfassend,
**dadurch gekennzeichnet, dass** es darin besteht, nach dem Durchführen einer Fourier-Transformierten (P1) der Projektionen diese Transformierte in Blöcke zu zerlegen (P3), abgegrenzt durch Grenzfrequenzen (fx, fy), eine inverse Fourier-Transformierte (P3) der Blöcke durchzuführen, wobei die Rückprojektion (P4) mit jeder der mit den genannten Blöcken verbundenen Projektionen durchgeführt wird, wodurch man Bildchen (E5) erhält, und die Bildchen zu kombinieren (P6), um das Bild (E6) zu erhalten.

2. Verfahren nach Anspruch 1, **dadurch gekennzeichnet, dass** die Bildchen kombiniert werden, nachdem sie einer Fourier-Transformierten (P5) unterzogen wurden, und man das Bild durch eine inverse Fourier-Transformierte (P7) erhält.

3. Verfahren nach einem der Ansprüche 1 und 2, **dadurch gekennzeichnet, dass** die Rückprojektionen für jeden der Blöcke identisch sind.

4. Verfahren nach einem der Ansprüche 1 bis 3, **dadurch gekennzeichnet, dass** es Eliminationen von Blöcken nach Inhaltskriterien gibt.

5. Verfahren nach einem der Ansprüche 1 bis 4, **dadurch gekennzeichnet, dass** die direkte oder inverse Fourier-Transformierte eine zeitliche Fourier-Transformierte der Projektionen und eine räumliche Fourier-Transformierte der Projektionen umfasst.

6. Verfahren nach einem der Ansprüche 1 bis 5, **dadurch gekennzeichnet, dass** das Bild durch Schnitte (L) rekonstruiert wird, wobei die Fourier-Transformierte eine räumliche Fourier-Transformierte längs zu den Schnitten paralleler Projektionslinien (Nq) umfasst.

7. Verfahren nach Anspruch 6, **dadurch gekennzeichnet, dass** die räumliche Fourier-Transformierte längs Projektionslinien (Nq) räumliche Frequenzen liefert, die in zweidimensionale räumliche Frequenzen (vx, vy) konvertierten Projektionsorientierungen (θ) zugeordnet werden, in Abhängigkeit von Hauptachsen (x, y) des Bilds (I).

8. Verfahren nach einem der Ansprüche 1 bis 7, **dadurch gekennzeichnet, dass** es vor der Rückprojektion (P4) eine Selektion der den genannten Blöcken zugeordneten Projektionen umfasst, die Nichtnullwerte haben, wobei die Rückprojektion nur bei den Nichtnullwert-Projektionen durchgeführt wird.

**Claims**

1. A method for reconstructing a three-dimensional image (I) from two-dimensional projections (Rf) of the image, comprising digital filtering of the projections, and then a back-projection of the filtered projections, **characterized in that** it consists, after having Fourier-transformed (P1) the projections, of breaking down (P3) said transform into blocks delimited by cutoff frequencies ($f_x$, $f_y$), of performing a reverse Fourier transform (P3) on the blocks, the back projection (P4) being performed on each of the projections associated with said blocks, thereby providing thumbnail images (E5), and of combining (P6) the thumbnail images in order to obtain the image (E6).

2. The method according to claim 1, **characterized in that** the thumbnail images are combined after having undergone a Fourier transform (P5) and the image is obtained by a reverse Fourier transform (P7).

3. The method according to any of claims 1 and 2, **characterized in that** the back projections are identical for each of the blocks.

4. The method according to any of claims 1 to 3, **characterized in that** it comprises elimination of blocks according to content-based criteria.

5. The method according to any of claims 1 to 4, **characterized in that** the direct or reverse Fourier transform comprises a temporal Fourier transform of the projections and a spatial Fourier transform of the projections.

6. The method according to any of claims 1 to 5, **characterized in that** the image is reconstructed by cuts (L), the Fourier transform comprising a spatial Fourier transform along the lines of projections (Nq) parallel to the cuts.

7. The method according to claim 6, **characterized in that** the spatial Fourier transform along the lines of projections (Nq) provides spatial frequencies (vp) which are associated with orientations of projections (θ) converted into two-dimensional spatial frequencies (vx, vy) according to main axes (x, y) of the image (I).

8. The method according to any of claims 1 to 7, **characterized in that** it comprises, before the back projection (P4), a selection of projections associated with said blocks which have non-zero values, whereby the back projections are only performed on said projections with non-zero values.

FIG.1

FIG. 2

FIG. 3

EP 1 290 634 B1

FIG. 4

FIG. 5

FIG. 6

FIG. 7

FIG. 8

MESURES AUXILIAIRES
(IMAGES STÉRÉOSCOPIQUES,
ETC.)

MESURES
(PROJECTIONS)

RÉARRANGEMENT
CONIQUE-PARALLÈLE

MESURES
RÉARRANGÉES

ESTIMATION DU
MOUVEMENT

COMPENSATION DU
MOUVEMENT SUR LES
MESURES

RECONSTRUCTION
SPATIO-TEMPORELLE
ACCÉLÉRÉE

COMPENSATION DU
MOUVEMENT SUR LES
IMAGES

SÉQUENCES D'IMAGES
DE L'OBJET

FIG. 9